# EUROPÄISCHE PATENTANMELDUNG

(11) **EP 1 884 722 A2**
(43) Veröffentlichungstag der Anmeldung: **06.02.2008**
(21) Anmeldenummer: 07014374.8
(22) Anmeldetag: 21.07.2007
(51) Int. Cl.: F24H 8/00

(54) **Vorrichtung mit Mitteln zur Durchführung von Ablaufschritten zur Neutralisation von Kondensat aus einem Heizgerät sowie Verfahren hierzu**

(30) Priorität: 05.08.2006 DE 102006036725
(71) Anmelder: Bomat Heiztechnik GmbH, 88662 Überlingen (DE)
(72) Erfinder: Bommer, Rolf, 88662 Überlingen (DE)
(74) Vertreter: Daub, Thomas

(57) **Zusammenfassung**

Die Erfindung bezieht sich auf eine Vorrichtung mit Mitteln zur Durchführung von Ablaufschritten zur Neutralisation von Kondensat aus einem Heizgerät, welche mindestens einen Behälter (1) zum Sammeln des Kondensats, der mindestens einen Kondensateinlass (5) zum Einleiten des zu neutralisierenden Kondensats und mindestens einen Kondensatauslass (13) zum Abführen des neutralisierten Kondensats aufweist, und mindestens eine Neutralisationseinrichtung (4) zum Zuführen eines Neutralisationsmittels in das Kondensat umfassen, und ein Verfahren hierzu.

Um eine Vorrichtung mit Mitteln zur Durchführung von Ablaufschritten zur Neutralisation von Kondensat aus einem Heizgerät und ein Verfahren hierzu zu schaffen, bei welchen eine einfache Regulierung des pH-Werts des Kondensats ermöglicht ist, wird erfindungsgemäß vorgeschlagen, dass bei der Vorrichtung mindestens ein Mittel zum Durchführen von mindestens einem diskontinuierlichen Ablaufschritt vorgesehen ist und beim Verfahren mindestens ein Ablaufschritt diskontinuierlich ausführbar ist.

## Beschreibung

Die Erfindung betrifft eine Vorrichtung mit Mitteln zur Durchführung von Ablaufschritten zur Neutralisation von Kondensat aus einem Heizgerät nach dem Oberbegriff des Patentanspruchs 1 sowie ein Verfahren hierzu nach dem Oberbegriff des Patentanspruchs 11.

Zunehmend kommen in der Heizungstechnik Heizgeräte zum Einsatz, die als so genannte Brennwertgeräte ausgebildet sind. Hierbei wird das Abgas durch Wärmeentzug auf unter 50°C abgekühlt. Dabei tritt der eigentliche Brennwerteffekt ein, d.h. der Wasserdampf, der bei der Verbrennung von Brennstoff entsteht und im Abgas enthalten ist, erreicht den so genannten Taupunkt und kondensiert. Die dabei freigesetzte latente Kondensationswärme wird zusätzlich zur sensiblen Wärme des Abgases auf das Heizsystem übertragen. Hierdurch wird die im Brennstoff enthaltene Energie um einen weiteren Anteil nutzbar gemacht. Hierbei entsteht jedoch saures Kondenswasser bzw. Kondensat, welches Feinstaub, Schwefeloxide, Stickstoffoxide, Teer, Ruß, unverbrannte Kohlenwasserstoffe und/oder Metallverbindungen aus dem Brennstoff bzw. von den gekühlten metallischen Oberflächen, an denen das Abgas kondensiert, enthält. Das Kondensat muss in einer nachgeschalteten Neutralisationsvorrichtung behandelt werden, bevor es in die Kanalisation gelangen darf. Bei einer Neutralisation erfolgt eine pH-Wert-Verschiebung des Kondensats in Richtung "neutral". Die Neutralisation erfolgt in der Regel in der Form, dass das Kondensat entweder ein zumeist alkalisches Granulat (z.B.: Mischung aus Magnesium-Hydroxid und Magnesiumoxid oder Calciumsilikathydrat) durchfließt oder dadurch, dass dem Kondensat eine basische Flüssigkeit zugeführt wird. Hierdurch wird der pH-Wert auf 6,5 bis 9 verschoben. Zum Teil sind die Neutralisationsvorrichtungen im Brennwertgerät integriert, zum Teil sind sie extern in die Kondensatableitung eingebunden.

Aus der EP 0 277 300 B1 ist eine gattungsgemäße Vorrichtung zur Neutralisation von Kondensat aus Heizgeräten bekannt. Die Vorrichtung weist einen Absetzbehälter mit einem Zulauf für das Kondensat auf, wobei sich im Absetzbehälter die im Kondensat enthaltenen schwereren Teilchen, wie Asche und Ruß, absetzen. Das Kondensat gelangt über einen Filter in einen Reinwasserbehälter, in welchem der pH-Wert des Kondensats auf einen zulässigen Wert angehoben wird, indem eine basische Flüssigkeit zugeführt wird. Das auf diese Weise neutralisierte Kondensat gelangt über einen Aktivkohlefilter in die Kanalisation.

Zum allgemeinen technischen Hintergrund wird noch auf die DE 93 11 083 U1 verwiesen.

Der Erfindung liegt nun die Aufgabe zugrunde, eine Vorrichtung mit Mitteln zur Durchführung von Ablaufschritten zur Neutralisation von Kondensat aus einem Heizgerät und ein Verfahren hierzu zu schaffen, welche eine einfache Regulierung des pH-Werts des Kondensats ermöglichen.

Diese Aufgabe wird erfindungsgemäß bei einer Vorrichtung durch die im Kennzeichen des Patentanspruchs 1 gegebenen Merkmale und bei einem Verfahren durch die im Kennzeichen des Patentanspruchs 11 gegebenen Merkmale gelöst, wobei weitere Ausgestaltungen der Erfindung den Unteransprüchen entnommen werden können.

Die Erfindung geht aus von einer Vorrichtung mit Mitteln zur Durchführung von Ablaufschritten zur Neutralisation von Kondensat aus einem Heizgerät und einem Verfahren zur Durchführung der Ablaufschritte.

Es wird vorgeschlagen, dass bei der Vorrichtung mindestens ein Mittel zum Durchführen von mindestens einem diskontinuierlichen Ablaufschritt vorgesehen ist und beim Verfahren mindestens ein Ablaufschritt diskontinuierlich ausführbar ist. Vorteilhafterweise handelt es sich bei dem Ablaufschritt um ein diskontinuierliches Zuführen von Neutralisationsmittel und/oder ein diskontinuierliches Abführen von neutralisiertem Kondensat. Beim diskontinuierlichen Zuführen von Neutralisationsmittel wird einer angesammelten größeren Menge an Kondensat eine vorbestimmte Menge an Neutralisationsmittel zudosiert, so dass eine genaue Erfassung des pH-Werts und somit eine exakte pH-Wert-Regulierung möglich ist. Ferner wird nur so viel Neutralisationsmittel verbraucht, wie für eine ausreichende Neutralisation des Kondensats benötigt wird. Das diskontinuierliche Abführen von neutralisiertem Kondensat ermöglicht vorteilhafterweise ein Abführen des neutralisierten Kondensats in Abhängigkeit davon, ob die Neutralisation auch ausreichend erfolgt ist. Um dies zu kontrollieren, ist vorteilhafterweise im Kondensatauslass eine Indikationseinrichtung vorgesehen, die anzeigt, ob saures oder neutralisiertes Kondensat den Behälter verlässt.

In einer weiteren Ausgestaltung der Erfindung wird vorgeschlagen, dass das Mittel zum diskontinuierlichen Zuführen von Neutralisationsmittel eine Messeinrichtung für den Füllstand des Kondensats im Behälter aufweist, welche mit einer Dosiereinrichtung für das Neutralisationsmittel der Neutralisationseinrichtung gekoppelt ist, wobei die Dosiereinrichtung mit dem Kondensateinlass der Vorrichtung verbunden ist. Dadurch, dass das Neutralisationsmittel zusammen mit dem Kondensat in den Sammelbehälter einleitbar ist, ergibt sich eine sehr gute Durchmischung der beiden Komponenten.

Ferner wird vorgeschlagen, dass in einem geodätisch oben liegenden Bereich des Sammelbehälters eine Warneinrichtung vorgesehen ist, die eine Störmeldung ausgibt, wenn ein maximaler Füllstand im Behälter überschritten ist. Die Ausgabe der Störmeldung kann dann zum Abschalten eines Brenners des Heizgeräts führen, um die Entstehung von weiterem Kondensat zu verhindern.

In einer weiteren Ausgestaltung der Erfindung wird vorgeschlagen, dass in der Neutralisationseinrichtung eine Alarmeinrichtung vorgesehen ist, die eine Warnmeldung ausgibt, wenn ein vorbestimmter Stand des Neutralisationsmittels in einem Vorratsbehälter der Neutralisationseinrichtung unterschritten ist. Die Ausgabe dieser Warnmeldung kann dann ebenfalls zum Abschalten eines Brenners des Heizgeräts führen, um die Entstehung von weiterem Kondensat zu verhindern.

Weitere Ausgestaltungen und Vorteile der Erfindung gehen aus den übrigen Unteransprüchen und der Beschreibung hervor.

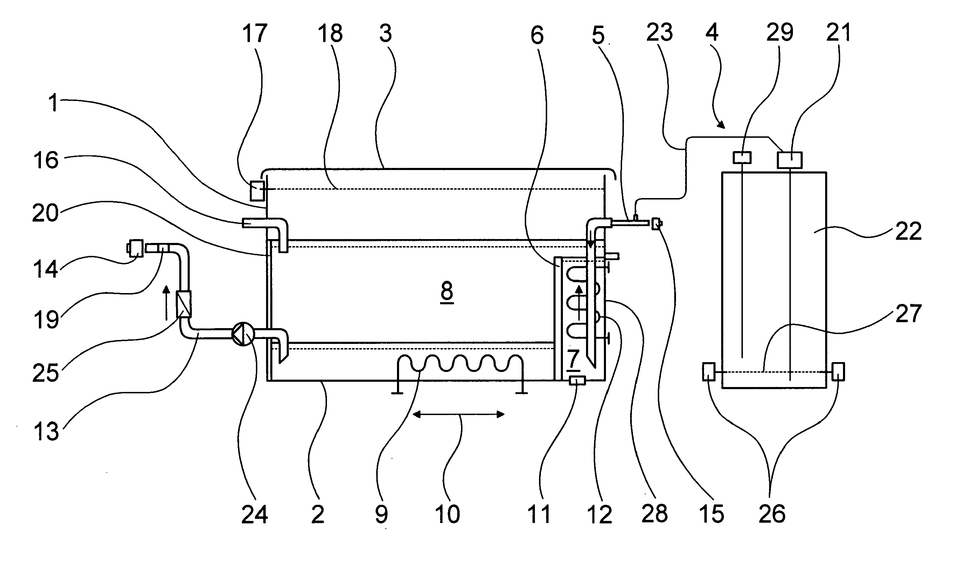

Im Folgenden wird ein Ausführungsbeispiel der Erfindung anhand einer einzigen Figur näher erläutert. Die Figur, die Beschreibung und die Ansprüche enthalten zahlreiche Merkmale in Kombination, die der Fachmann zweckmäßigerweise auch einzeln betrachten und zu sinnvollen weiteren Kombinationen zusammenfassen wird.

Die einzige Figur zeigt in einem Längsschnitt eine erfindungsgemäße Vorrichtung mit Mitteln zur Durchführung von Ablaufschritten zur Neutralisation von Kondensat aus einem hier nicht dargestellten Heizgerät für feste, gasförmige und/oder flüssige Brennstoffe. Das Kondensat weist Schwefelverbindungen, Kohlenwasserstoffverbindungen, wie beispielsweise Öl, Feinstaub, und/oder Metallverbindungen usw. auf. Die Ablaufschritte umfassen ein Sammeln des Kondensats, ein Zuführen von Neutralisationsmittel in das Kondensat und ein Abführen des neutralisierten Kondensats. Selbstverständlich können Ablaufschritte auch mehrfach vorgesehen sein, oder es können noch weitere Ablaufschritte, wie beispielsweise das Reinigen des Kondensats von Öl und Feststoffteilchen, vorgesehen sein.

Die Vorrichtung umfasst mindestens einen Behälter 1 zum Sammeln des Kondensats aus dem Heizgerät, der einen Behälterboden 2 aufweist und mit einem abnehmbaren Deckel 3 verschließbar ist, und mindestens eine Neutralisationseinrichtung 4 zur Neutralisation des gesammelten Kondensats, indem ein Neutralisationsmittel in das Kondensat zuführbar ist. Der Behälter 1 weist einen Kondensateinlass 5 zum Einleiten des zu neutralisierenden Kondensats auf. Über diesen Kondensateinlass 5 kann das saure, unbehandelte Kondensat entweder gemäß vorliegendem Ausführungsbeispiel frei zufließen oder es kann über eine Förderpumpe in den Behälter 1 gedrückt werden.

Der Behälter 1 wird über eine im Behälter 1 befindliche Trenneinrichtung 6 in eine erste Kammer 7 zum Absetzen von im Kondensat befindlichen schwereren Teilchen, wie beispielsweise Asche und Ruß, und in eine zweite Kammer 8 zum Sammeln des Kondensats unterteilt, wobei auch weitere Kammern zum Durchführen weiterer Ablaufschritte denkbar wären. Am Behälterboden 2 ist im Bereich der zweiten Kammer 8 ein erster Wärmetauscher 9 angeordnet. Die vorzugsweise plattenförmige Trenneinrichtung 6 kann fest oder in Richtung einer Längsachse 10 des Sammelbehälters 1 verstellbar im Sammelbehälter 1 angeordnet sein. Die verstellbare Ausführung ermöglicht eine variable erste Kammer 7.

Vorzugsweise mündet der Kondensateinlass 5 in der Nähe des Behälterbodens 2 in die erste Kammer 7, wobei der Behälterboden 2 im Bereich der ersten Kammer 7 mindestens eine Entleerungsöffnung 11 zur Abfuhr der schweren Teilchen, die sich am Behälterboden 2 abgesetzt haben, aufweist. Am Kondensateinlass 5 ist ein zweiter Wärmetauscher 12 vorgesehen.

Der Behälter 1 weist einen Kondensatauslass 13 zum Abführen des neutralisierten Kondensats auf, welcher vorzugsweise in einem geodätisch unten liegenden Bereich des Behälters 1 vorgesehen ist. Am Kondensatauslass 13 und/oder am Kondensateinlass 5 sind leicht demontierbare Anschlüsse 14, 15 vorgesehen, die eine schnelle Wartung der Vorrichtung ermöglichen. Des Weiteren können vor dem Kondensateinlass 5 und/oder nach dem Kondensatauslass 13 geruchshemmende Einrichtungen vorgesehen sein. Ferner ist ein Notüberlauf 16 vorgesehen, der ein Abfließen des Kondensats oberhalb eines bestimmten Füllstands ermöglicht. Zusätzlich ist in einem geodätisch oben liegenden Bereich des Behälters 1 eine Warneinrichtung 17 vorgesehen, die eine Störmeldung ausgibt, wenn ein maximaler Füllstand bzw. eine maximale Füllhöhe 18 im Behälter 1 überschritten ist. Die Abgabe der Störmeldung führt zum Abschalten eines Brenners des Heizgeräts, so dass kein weiteres Kondensat entsteht. Im Kondensatauslass 13 ist eine Indikationseinrichtung 19 vorgesehen, die anzeigt, ob saures oder neutralisiertes Kondensat den Behälter 1 verlässt.

Die Vorrichtung funktioniert als Wassersperre zur Vermeidung eines Austritts von Gasen aus dem Heizgerät. Es wird vermieden, dass Gas über den Kondensateinlass 5 in die Kammer 8 und von dort aus in die Umgebung gelangt.

Um eine Vorrichtung mit Mitteln zur Durchführung von Ablaufschritten zur Neutralisation von Kondensat aus einem Heizgerät und ein Verfahren hierzu zu schaffen, bei welchen eine einfache Regulierung des pH-Werts des Kondensats ermöglicht ist, wird erfindungsgemäß vorgeschlagen, dass bei der Vorrichtung mindestens ein Mittel zum Durchführen von mindestens einem diskontinuierlichen Ablaufschritt vorgesehen ist und beim Verfahren mindestens ein Ablaufschritt diskontinuierlich ausführbar ist. Das Mittel dient zum diskontinuierlichen Zuführen von Neutralisationsmittel und/oder zum diskontinuierlichen Abführen von neutralisiertem Kondensat.

Um ein diskontinuierliches Zuführen von Neutralisationsmittel in den Sammelbehälter 1 zu ermöglichen, weist das Mittel beispielsweise eine Messeinrichtung 20 für den Füllstand des Kondensats im Behälter 1 auf, welche mit einer Dosiereinrichtung 21 für das Neutralisationsmittel der Neutralisationseinrichtung 4 gekoppelt ist. Die Messung des Füllstands kann sowohl kontinuierlich als auch diskontinuierlich bzw. intermittierend erfolgen. Die Dosiereinrichtung 21 ist mit einem Vorratsbehälter 22 der Neutralisationseinrichtung 4 verbunden. Die Zudosierung erfolgt über den Kondensateinlass 5, indem eine Zuführleitung 23 der Dosiereinrichtung 21 in den Kondensateinlass 5 mündet. Es ist jedoch auch ein kontinuierliches Zuführen von Neutralisationsmittel möglich.

Um ein diskontinuierliches Abführen von neutralisiertem Kondensat aus dem Sammelbehälter 1 zu ermöglichen, weist das Mittel beispielsweise eine mit dem Kondensatauslass 13 in Wirkverbindung stehende Förderpumpe 24 auf, welche mit der Füllstandsmesseinrichtung 20 und einem Ventil 25 zur Regelung der Abführmenge des neutralisierten Kondensats gekoppelt ist. Das Kondensat wird über die Förderpumpe 24 aus dem Behälter 1 abgepumpt, wobei das Ventil 25 zur Regelung der Abführmenge dient.

In der Neutralisationseinrichtung 4 ist eine Einrichtung 29 zur Überprüfung des Flüssigkeitsstands im Vorratsbehälter 22 vorgesehen. Zusätzlich ist eine Alarmeinrichtung 26 vorgesehen, die eine Störmeldung ausgibt, wenn ein vorbestimmter Flüssigkeitsstand 27 im Vorratsbehälter 22 unterschritten ist.

Über den Kondensateinlass 5 gelangt das saure, unbehandelte Kondenswasser aus dem Heizgerät zuerst in die erste Kammer 7 in die Nähe des Behälterbodens 2. Dort lagern sich die im Kondensat befindlichen schwereren Teilchen, wie beispielsweise Asche und Ruß, ab und können vorzugsweise über die mindestens eine Entleerungsöffnung 11 im Behälterboden 2 aus dem Behälter 1 entfernt werden. Das auf diese Weise von Feststoffteilchen weitestgehend gereinigte Kondensat steigt zwischen der Trenneinrichtung 6 und einer Gehäusewand 28 in der ersten Kammer 7 nach oben. Das Kondensat läuft über die Trenneinrichtung 6 in die zweite Kammer 8 und sammelt sich dort zur Neutralisation. Erreicht das Kondensat einen bestimmten Füllstand im Behälter 1, so wird über die Füllstandsmesseinrichtung 20 ein Signal an die Dosiereinrichtung 21 zur Inbetriebnahme gegeben. Die Dosiereinrichtung 21 gibt dann über den Kondensateinlass 5 die gewünschte Menge an Neutralisationsmittel in den Behälter 1, d.h. es wird ein mengengeregeltes Zudosieren von Neutralisationsmittel in den Sammelbehälter 1 in Abhängigkeit von einer vorbestimmten Kondensatmenge im Behälter 1 vorgenommen. Hierbei wird der pH-Wert des Kondensats auf einen zulässigen Wert angehoben, vorteilhafterweise auf einen pH-Wert zwischen 6,5 und 7,0. Anschließend wird das neutralisierte Kondensat über den Kondensatauslass 13 in der Regel in die hier nicht dargestellte Kanalisation gepumpt, wobei das Ventil 25 zur Regelung der Abführmenge dient, d.h. es kann ein mengengeregeltes Abführen von neutralisiertem Kondensat aus dem Sammelbehälter 1 in Abhängigkeit von einer vorbestimmten Kondensatmenge im Behälter 1 vorgenommen werden.

### Bezugszeichen

- 1: Behälter
- 2: Behälterboden
- 3: Deckel
- 4: Neutralisationseinrichtung
- 5: Kondensateinlass
- 6: Trenneinrichtung
- 7: Kammer
- 8: Kammer
- 9: Wärmetauscher
- 10: Längsachse
- 11: Entleerungsöffnung
- 12: Wärmetauscher
- 13: Kondensatauslass
- 14: Anschluss
- 15: Anschluss
- 16: Notüberlauf
- 17: Warneinrichtung (Füllstand)
- 18: maximaler Füllstand
- 19: Indikationseinrichtung
- 20: Messeinrichtung (Füllstand)
- 21: Dosiereinrichtung
- 22: Vorratsbehälter
- 23: Zuführleitung
- 24: Förderpumpe
- 25: Regelventil
- 26: Alarmeinrichtung
- 27: Flüssigkeitsstand
- 28: Gehäusewand
- 29: Einrichtung zur Überprüfung des Flüssigkeitsstands

## Patentansprüche

1. Vorrichtung mit Mitteln zur Durchführung von Ablaufschritten zur Neutralisation von Kondensat aus einem Heizgerät, welche mindestens einen Behälter (1) zum Sammeln des Kondensats, der mindestens einen Kondensateinlass (5) zum Einleiten des zu neutralisierenden Kondensats und mindestens einen Kondensatauslass (13) zum Abführen des neutralisierten Kondensats aufweist, und mindestens eine Neutralisationseinrichtung (4) zum Zuführen eines Neutralisationsmittels in das Kondensat umfassen,
**gekennzeichnet durch**
mindestens ein Mittel (4, 20, 21, 24, 25) zum Durchführen von mindestens einem diskontinuierlichen Ablaufschritt.

2. Vorrichtung nach Anspruch 1,
**dadurch gekennzeichnet, dass**
das Mittel (4, 20, 21) zum diskontinuierlichen Zuführen von Neutralisationsmittel dient.

3. Vorrichtung nach Anspruch 1 oder 2,
**dadurch gekennzeichnet, dass**
das Mittel (20, 24, 25) zum diskontinuierlichen Abführen von neutralisiertem Kondensat dient.

4. Vorrichtung nach einem der vorhergehenden Ansprüche,
**dadurch gekennzeichnet, dass**
das Mittel zum diskontinuierlichen Zuführen von Neutralisationsmittel (4, 20, 21) eine Messeinrichtung (20) für den Füllstand des Kondensats im Behälter (1) aufweist, welche mit einer Dosiereinrichtung (21) für das Neutralisationsmittel der Neutralisationseinrichtung (4) gekoppelt ist.

5. Vorrichtung nach Anspruch 4,
**dadurch gekennzeichnet, dass**
die Dosiereinrichtung (21) mit einem Vorratsbehälter (22) der Neutralisationseinrichtung (4) verbunden ist.

6. Vorrichtung nach einem der Ansprüche 4 oder 5,
**dadurch gekennzeichnet, dass**
die Dosiereinrichtung (21) mit dem Kondensateinlass (5) der Vorrichtung verbunden ist.

7. Vorrichtung nach einem der vorhergehenden Ansprüche,
**dadurch gekennzeichnet, dass**
das Mittel zum diskontinuierlichen Abführen von neutralisiertem Kondensat (20, 24, 25) eine mit dem Kondensatauslass (13) in Wirkverbindung stehende Förderpumpe (24) umfasst, welche mit der Messeinrichtung (20) und einem Ventil (25) zur Regelung der Abführmenge des neutralisierten Kondensats gekoppelt ist.

8. Vorrichtung nach einem der vorhergehenden Ansprüche,
**dadurch gekennzeichnet, dass**
in einem geodätisch oben liegenden Bereich des Sammelbehälters (1) eine Warneinrichtung (17) vorgesehen ist, die eine Störmeldung ausgibt, wenn ein maximaler Füllstand (18) im Behälter (1) überschritten ist.

9. Vorrichtung nach einem der vorhergehenden Ansprüche,
**dadurch gekennzeichnet, dass**
der Behälter (1) einen Notüberlauf (16) aufweist.

10. Vorrichtung nach einem der vorhergehenden Ansprüche,
**dadurch gekennzeichnet, dass**
in der Neutralisationseinrichtung (4) eine Alarmeinrichtung (26) vorgesehen ist, die eine Störmeldung ausgibt, wenn ein vorbestimmter Flüssigkeitsstand (27) in einem Vorratsbehälter (22) der Neutralisationseinrichtung (4) unterschritten ist.

11. Vorrichtung nach einem der vorhergehenden Ansprüche, **gekennzeichnet durch** die Ausbildung als Flüssigkeitssperre.

12. Verfahren zur Durchführung von Ablaufschritten zur Neutralisation von Kondensat aus einem Heizgerät, insbesondere unter Verwendung einer Vorrichtung nach mindestens einem der Ansprüche 1 bis 11, wobei die Ablaufschritte ein Sammeln des Kondensats in einem Sammelbehälter (1), ein Zuführen von Neutralisationsmittel in das Kondensat und ein Abführen des neutralisierten Kondensats aus dem Sammelbehälter (1) umfassen,
**dadurch gekennzeichnet, dass**
mindestens ein Ablaufschritt diskontinuierlich ausführbar ist.

13. Verfahren nach Anspruch 12,
**gekennzeichnet durch**
ein diskontinuierliches Zuführen von Neutralisationsmittel.

14. Verfahren nach Anspruch 12 oder 13,
**gekennzeichnet durch**
ein diskontinuierliches Abführen von neutralisiertem Kondensat.

15. Verfahren nach einem der Ansprüche 12 bis 14,
**dadurch gekennzeichnet, dass**
ein mengengeregeltes Zudosieren von Neutralisationsmittel in den Sammelbehälter (1) in Abhängigkeit von einer vorbestimmten Kondensatmenge im Behälter (1) vorgenommen wird.

16. Verfahren nach einem der Ansprüche 12 bis 15,
**dadurch gekennzeichnet, dass**
ein mengengeregeltes Abführen von neutralisiertem Kondensat aus dem Sammelbehälter (1) in Abhängigkeit von einer vorbestimmten Kondensatmenge im Behälter (1) vorgenommen wird.

17. Verfahren nach einem der Ansprüche 12 bis 16, **gekennzeichnet durch** folgende Schritte:
a) Sammeln des Kondensats im Behälter (1), wobei der Füllstand des Kondensats im Behälter (1) gemessen wird,
b) Zudosieren des Neutralisationsmittels aus einem Vorratsbehälter (22) der Neutralisationseinrichtung (4) bei einem vorbestimmten Füllstand des Kondensats, und
c) Abführen des neutralisierten Kondensats aus dem Behälter (1).

18. Verfahren nach einem der Ansprüche 12 bis 17, **gekennzeichnet durch** eine kontinuierliche oder diskontinuierliche Füllstandsmessung.

19. Verfahren nach einem der Ansprüche 12 bis 18,
**dadurch gekennzeichnet, dass**
die Zudosierung über den Kondensateinlass (5) erfolgt.
